# EUROPÄISCHE PATENTSCHRIFT

(11) **EP 1 097 322 B1**
(45) Veröffentlichungstag und Bekanntmachung des Hinweises auf die Patenterteilung: **28.04.2004**
(21) Anmeldenummer: 99931220.0
(22) Anmeldetag: 30.06.1999
(51) Int. Cl.: F16J 15/08

(54) **ZYLINDERKOPFDICHTUNG**
CYLINDER HEAD GASKET
JOINT DE CULASSE

(30) Priorität: 18.05.1999 DE 19922634
(43) Veröffentlichungstag der Anmeldung: 09.05.2001
(73) Patentinhaber: ElringKlinger AG, 72581 Dettingen (DE)
(72) Erfinder: SCHMUCKER, Frank, D-89584 Ehingen (DE); SCHENK, Peter, D-72531 Hohenstein (DE)
(74) Vertreter: Hoeger, Stellrecht & Partner
(86) Internationale Anmeldenummer: PCT/EP1999/004510
(87) Internationale Veröffentlichungsnummer: WO 2000/070245

(56) Entgegenhaltungen:
- EP-A- 0 468 526
- US-A- 4 272 085

## Beschreibung

Die Erfindung befaßt sich mit Zylinderkopfdichtungen, bei denen mindestens die eine Seite der Dichtungsplatte, d. h. mindestens deren eine Hauptoberfläche, von einer Blechlage gebildet wird.

Zylinderkopfdichtungen dieser Art besitzen überwiegend eine Dichtungsplatte, welche mehrere aufeinandergeschichtete Stahlblechlagen aufweist, von denen eine oder mehrere aus Federstahlblech besteht bzw. bestehen und mit als Dichtelemente dienenden Sicken versehen ist bzw. sind, welche Durchgangsöffnungen der Dichtungsplatte umschließen. Bei den Sicken kann es sich um im Querschnitt ungefähr rinnen- oder U-förmige sogenannte Vollsicken oder um im Querschnitt ungefähr stufen- oder Z-förmige sogenannte Halbsicken handeln. Befindet sich eine Sicke an der Außenseite der Zylinderkopfdichtung, d. h. ist die Sicke in einer Außenlage der Dichtungsplatte ausgebildet, liegt bei eingebauter Zylinderkopfdichtung im Falle einer Vollsicke diese entweder mit dem konvexen Sickenkamm oder mit ihren beiden sogenannten Sickenfüßen gegen den Zylinderkopf bzw. den Motorblock an; im Falle einer Halbsicke ergibt sich gleichfalls eine quasi-linienförmige Anlage der gesickten Metallage am Zylinderkopf bzw. Motorblock in einem derjenigen Bereiche der Metallage, in denen diese zur Ausbildung der Halbsicke abgebogen wurde.

Bei Zylinderkopfdichtungen, bei denen die Hauptoberflächen der Dichtungsplatte von einer oder mehreren Metallagen gebildet werden, ist es üblich, die metallischen Hauptoberflächen der Dichtungsplatte partiell oder vollflächig mit einer elastische Eigenschaften aufweisenden Kunststoffmasse zu beschichten, insbesondere um zum Zwecke der sogenannten Mikroabdichtung Leckagen im Bereich von Poren und/oder Lunkern in den gegeneinander abzudichtenden Flächen (Dichtflächen) von Motorblock und Zylinderkopf zu verhindern. Diese Beschichtungen haben üblicherweise eine Schichtdicke von 18 bis 28 µm und bestehen aus einem elastomeren Material, dessen Vernetzungsgrad so hoch ist, daß die Beschichtung für die Mikroabdichtung ausreichende elastische Eigenschaften aufweist.

Im Motorbetrieb führen die der Zylinderkopfdichtung benachbarten Dichtflächen von Zylinderkopf und Motorblock Bewegungen in zu diesen Flächen senkrechter Richtung durch, d. h. die Breite des von den genannten Flächen gebildeten sogenannten Dichtspalts verändert sich im Motorbetrieb sowohl zeitlich, als auch räumlich (infolge der nicht überall gleichen Bauteilsteifigkeiten von Zylinderkopf und Motorblock). Bei diesen im Motorbetrieb auftretenden Veränderungen der Dichtspaltbreite können die Dichtflächen von Zylinderkopf und Motorblock trotz der Rückfederungseigenschaften der Zylinderkopfdichtung bereichsweise von letzterer abheben, was trotz der vorstehend beschriebenen Beschichtung im Bereich der Sicken zu Leckagen führen kann:

Späne oder andere Bearbeitungsrückstände, aber auch Schmutzpartikel, können im Motorbetrieb aus einem Öl- oder einem Kühlmittelkanal des Motorblocks oder Zylinderkopfs herausgespült und auf einen Oberflächenbereich der Zylinderkopfdichtung geschwemmt werden, von dem die benachbarte Dichtfläche des Motorblocks bzw. Zylinderkopfs gerade abgehoben hat. Bearbeitungsrückstände oder Schmutzpartikel können aber auch schon beim Einbau der Zylinderkopfdichtung auf die Sicke gelangen und unabhängig davon, wie und wann sie auf die Sicke gelangt sind, durchaus derartige Abmessungen haben, daß sie sich durch die Dichtflächenpressung zwischen der Zylinderkopfdichtung einerseits und Motorblock bzw. Zylinderkopf andererseits nicht vollständig in die Kunststoffbeschichtung der Zylinderkopfdichtung einpressen und einbetten lassen und infolgedessen Leckagen zur Folge haben. Dies gilt im besonderen für den Bereich einer eine Öl- oder Kühlmittel-Durchgangsöffnung der Zylinderkopfdichtung umschließenden Sicke, da schon beim Einbau der Zylinderkopfdichtung, d. h. beim Anziehen der Zylinderkopfschrauben, die Kunststoffbeschichtung im Bereich der angenähert linienförmigen Abdichtungszone, in der die beschichtete Sicke gegen den Zylinderkopf bzw. Motorblock angepreßt wird, teilweise oder gar ganz verdrängt wird. Gelangt also beispielsweise ein Metallspan in dieser Abdichtungszone zwischen die Sicke und den Zylinderkopf bzw. Motorblock, ergibt sich zu beiden Seiten des Spans ein zu einer Leckage führender Durchlaß.

Handelt es sich bei der Sicke um eine Halbsicke, springt diese - ausgehend von der abzudichtenden Durchgangsöffnung - nach außen vor, d. h. in Richtung auf den Zylinderkopf bzw. den Motorblock. Im Falle einer Vollsicke kann diese entweder gleichfalls nach außen vorspringen oder mit ihrem konvexen Sickenkamm von der Dichtfläche des Zylinderkopfs bzw. Motorblocks weg weisen, so daß die beiden dieser Dichtfläche zugekehrten Sickenfüße bei eingebauter Zylinderkopfdichtung jeweils eine angenähert linienförmige, in sich geschlossene Abdichtungszone erhöhter Dichtflächenpressung bilden. Auch im letztgenannten Fall besteht das vorstehend geschilderte Problem, daß Späne oder andere Bearbeitungsrückstände oder Schmutzpartikel auf die Sickenfüße gelangen und zu Leckagen führen können.

Dieselbe Problematik kann sich aber auch im Inneren der Dichtungsplatte einer Zylinderkopfdichtung ergeben, deren Dichtungsplatte mehrere - mindestens zwei - Metallagen aufweist, von denen mindestens eine elastische Eigenschaften besitzt und mit einer die abzudichtende Durchgangsöffnung umschließenden Sicke versehen ist, da im Motorbetrieb Späne oder dergleichen zwischen die Metallagen und dann auf eine solche "innenliegende" Sicke gelangen können, weil im Motorbetrieb auch zwei Metallagen einer Dichtungsplatte bereichsweise voneinander abheben können, und zwar auch im Bereich eines Sickenkamms oder eines Sickenfußes. Erwähnt sei noch, daß es sich auch bei einer solchen "innenliegenden" Sicke um eine Vollsicke oder um eine Halbsicke handeln kann.

Der Erfindung lag die Aufgabe zugrunde, bei zylinderkopfdichtungen der beschriebenen Arten die nachteiligen Folgen einer solchen, an einer Sicke durch eine partikelförmige Verunreinigung hervorgerufenen Leckage zu verhindern.

Einerseits geht die Erfindung aus von einer Zylinderkopfdichtung mit einer Dichtungsplatte, welche wenigstens eine Metallage mit elastischen Eigenschaften aufweist, deren eine Seite eine Außenseite der Dichtungsplatte bildet, wobei die Dichtungsplatte eine Durchgangsöffnung sowie eine letztere umschließende, in der Metallage ausgebildete Sicke aufweist, welche bei eingebauter Dichtung auf der Außenseite der Dichtungsplatte eine angenähert linienförmige, in sich geschlossene Abdichtungszone erhöhter Dichtflächenpressung bildet, und wobei die Metallage auf der Außenseite der Dichtungsplatte mindestens im Bereich der Abdichtungszone sowie zu beiden Seiten der letzteren eine erste Beschichtung aus einer elastische Eigenschaften aufweisenden Kunststoffmasse besitzt.

Zur Lösung der gestellten Aufgabe wird eine solche Zylinderkopfdichtung erfindungsgemäß so gestaltet, daß die Metallage auf der Dichtungsplattenaußenseite mit einer die Durchgangsöffnung umschließenden, in sich geschlossenen Dichtwulst aus einer Kunststoffmasse beschichtet ist, welche auf der von der Durchgangsöffnung abgewandten Seite der Abdichtungszone sowie in geringem Abstand von letzterer angeordnet ist, wobei der Kamm oder Scheitel der Dichtwulst von der Metallage einen größeren Abstand aufweist als die Oberseite der ersten Beschichtung der Metallage.

Andererseits geht die Erfindung aus von einer Zylinderkopfdichtung mit einer Dichtungsplatte, welche mindestens zwei Metallagen aufweist, von denen mindestens eine erste elastische Eigenschaften besitzt, wobei die Dichtungsplatte eine Durchgangsöffnung sowie eine letztere umschließende, in der ersten Metallage ausgebildete Sicke aufweist, welche bei eingebauter Dichtung gegen die andere Metallage anliegt und so eine angenähert linienförmige, in sich geschlossene Abdichtungszone erhöhter Dichtflächenpressung bildet, und wobei die erste Metallage auf ihrer der anderen Metallage zugewandten Seite mindestens im Bereich der Abdichtungszone sowie zu beiden Seiten der letzteren eine erste Beschichtung aus einer elastische Eigenschaften aufweisenden Kunststoffmasse besitzt.

Zur Lösung der gestellten Aufgabe wird dann erfindungsgemäß eine solche Zylinderkopfdichtung so gestaltet, daß die erste Metallage auf ihrer der anderen Metallage zugewandten Seite mit einer die Durchgangsöffung umschließenden, in sich geschlossenen Dichtwulst aus einer Kunststoffmasse beschichtet ist, welche auf der von der Durchgangsöffnung abgewandten Seite der Abdichtungszone sowie im Abstand von letzterer angeordnet ist, wobei der Kamm der Dichtwulst von der ersten Metallage einen größeren Abstand aufweist als die Oberseite der ersten Beschichtung.

Handelt es sich bei der Sicke um eine Vollsicke, wird es im allgemeinen zu bevorzugen sein, die erfindungsgemäß vorzusehende Dichtwulst außerhalb der Sicke anzuordnen, wenn sich die Dichtwulst auf derjenigen Seite der sie tragenden Metallage befindet, auf der sich auch die konvexe Seite der Sicke befindet. In diesem Fall ist dann die Dichtwulst nicht nur im Abstand vom Sickenkamm und damit von der von letzterem gebildeten Abdichtungszone angeordnet, sondern die Dichtwulst wird dann vorteilhafterweise auch im Abstand von dem ihr zugewandten Sickenfuß (in der Draufsicht auf die gesickte Metallage) angebracht, und zwar so, daß dieser Abstand von diesem Sickenfuß so groß bemessen ist, wie wenn die Dichtwulst auf der anderen Seite der Metallage - diesem Sickenfuß benachbart - angebracht wäre.

In jedem der beiden Fälle läßt sich mit Hilfe der erfindungsgemäß vorzusehenden Dichtwulst die gestellte Aufgabe auf zweierlei Art lösen: Zum einen bildet die Dichtwulst - von der Durchgangsöffnung aus gesehen - hinter der Sicke eine zweite Abdichtungszone, und wenn die Dichtwulst aus einer hinreichende plastische Eigenschaften aufweisenden Kunststoffmasse erzeugt wurde und in hinreichend geringem Abstand von der Sicke verläuft, fließt die bei eingebauter Dichtung unter Druck stehende Kunststoffmasse der Dichtwulst in Richtung auf die Sicke und verschließt die von einer auf der Sicke liegenden Verunreinigung zu ihren beiden Seiten gebildeten Leckagedurchlässe.

Grundsätzlich könnte man die Dichtwulst auch auf der der Durchgangsöffnung zugewandten Seite der Sicke bzw. Abdichtungszone vorsehen, wobei sich dann die Rollen der beiden Dichtelemente Sicke und Dichtwulst vertauschen würden; zu bevorzugen sind jedoch Ausführungsformen mit auf der von der Durchgangsöffnung abgewandten Seite der Sicke liegender Dichtwulst, weil dann unter normalen Umständen die Sicke entsprechend ihrer ursprünglichen Aufgabe die Funktion eines ersten und hauptsächlichen Dichtelements übernimmt.

Die für die Herstellung der Dichtwulst verwendete Kunststoffmasse kann so ausgewählt werden, daß sie aufgrund eines verhältnismäßig niederen Vernetzungsgrades schon im kalten Zustand hinreichende plastische Eigenschaften und damit ein hinreichendes Fließverhalten besitzt, um dem Umstand Rechnung zu tragen, daß schon bei der Montage des Motors eine zu einer Leckage führend Verunreinigung auf der Sicke zu liegen kommen kann; die zur Bildung der Dichtwulst verwendete Kunststoffmasse kann aber auch so beschaffen sein, daß sie erst bei den verhältnismäßig hohen, im Motorbetrieb auftretenden Temperaturen ein für die Lösung der gestellten Aufgabe hinreichendes Fließverhalten aufweist.

Bei bevorzugten Ausführungsformen der erfindungsgemäßen Zylinderkopfdichtung handelt es sich bei der Dichtwulst um ein vorzugsweise im Siebdruckverfahren aufgebrachtes Dichtelement, und zwar insbesondere um eine Dichtwulst mit einer einem flachen Rechteck angenäherten Querschnittsform, da es das Siebdruckverfahren erlaubt, Breite und Höhe der zu erzeugenden Dichtwulst ziemlich exakt festzulegen.

Es wäre möglich, die erste Beschichtung unmittelbar hinter der von der Sicke gebildeten Abdichtungszone enden zu lassen und die Dichtwulst auf die Metallage aufzubringen, und zwar dennoch in verhältnismäßig geringem Abstand von der von der Sicke gebildeten Abdichtungszone. Bevorzugt werden jedoch Ausführungsformen, bei denen die Dichtwulst, und zwar insbesondere im Siebdruckverfahren, auf der ersten Beschichtung erzeugt wurde.

Aus den vorstehenden Ausführungen ergibt sich bereits, daß es vorteilhaft ist, wenn die die Dichtwulst bildende Kunststoffmasse eine höhere Plastizität aufweist als die für die erste Beschichtung verwendete Kunststoffmasse. Bei bevorzugten Materialien für die beiden Kunststoffmassen handelt es sich um Fluorelastomere, wobei die erste Beschichtung von einem Fluorelastomer gebildet werden sollte, dessen Vernetzungsgrad höher ist als derjenige des die Dichtwulst bildenden Fluorelastomers - anders ausgedrückt sollte das die Dichtwulst bildende Fluorelastomer eine höhere und für das Abdichten der beschriebenen Leckagen hinreichende Plastizität aufweisen.

Für eine gute Wirksamkeit der erfindungsgemäß vorzusehenden Dichtwulst sollte letztere (im ungepreßten Zustand) eine solche Höhe aufweisen, daß der Abstand des Kamms der Dichtwulst von der letztere tragenden Metallage 5 bis 210 µm größer ist als der Abstand der Oberseite der ersten Beschichtung von dieser Metallage. Handelt es sich bei der Sicke um eine Vollsicke, sollte die Dichtwulst höher sein als im Falle einer Halbsicke, wobei es sich als besonders vorteilhaft erwiesen hat, wenn bei Ausbildung der Sicke als Halbsicke die erwähnte Abstandsdifferenz 5 bis 80 µm, insbesondere 20 bis 30 µm beträgt, und wenn bei Ausbildung der Sicke als Vollsicke die erwähnte Abstandsdifferenz 5 bis 150 µm, insbesondere 50 bis 100 µm beträgt.

Wie sich aus den vorstehenden Erläuterungen ergibt, ist die Größe des Abstands der Dichtwulst von der von der Sicke gebildeten Abdichtungszone dann wesentlich, wenn die Lösung der gestellten Aufgabe ganz oder teilweise auf einem hinreichenden Fließen des Dichtwulstmaterials beruht. Andererseits darf der Abstand zwischen Abdichtungszone und Dichtwulst auch nicht zu gering sein, um auszuschließen, daß die eine Leckage verursachende Verunreinigung bis in den Bereich der Dichtwulst reicht. Deshalb wird empfohlen, den Abstand der Dichtwulst von der Abdichtungszone so zu bemessen, daß er mindestens 0,5 mm beträgt, vorzugsweise aber nicht größer als 3 mm ist.

Die später mit der ersten Beschichtung zu versehenden Metallagenbereiche werden vorteilhafterweise mit einem konventionellen Haftvermittler überzogen, ehe die Beschichtung aufgebracht wird, und auch die mit der Dichtwulst zu versehenden Oberflächenbereiche können zuvor mit einem Haftvermittler überzogen worden sein.

Ferner wird empfohlen, die erste Beschichtung und die Dichtwulst mit einer Antihaftbeschichtung zu überziehen, um ein Ankleben der Dichtungsmassen am Zylinderkopf bzw. Motorblock zu verhindern.

Grundsätzlich wird die erfindungsgemäße Lösung für eine zuverlässige Abdichtung von Flüssigkeitsdurchgangsöffnungen der Dichtungsplatte empfohlen; vor allem dann, wenn als Sicke eine Vollsicke verwendet wird, kann die erfindungsgemäße Lösung aber auch für Brennraum-Durchgangsöffnungen von Zylinderkopfdichtungen in Frage kommen, insbesondere dann, wenn die verwendeten Kunststoffmassen hinreichend temperaturbeständig und in einem solchen Abstand von der benachbarten Brennraum-Durchgangsöffnung angeordnet sind, daß sie den an ihren Orten im Motorbetrieb auftretenden Temperaturen widerstehen können.

Weitere Vorteile, Merkmale und Einzelheiten der Erfindung ergeben sich aus den beigefügten Ansprüchen und/oder aus der nachfolgenden Beschreibung sowie der beigefügten zeichnerischen Darstellung zweier besonders vorteilhafter Ausführungsformen der erfindungsgemäßen Zylinderkopfdichtung; in der Zeichnung zeigen:
- Fig. 1: eine Draufsicht auf einen Teil der ersten Ausführungsform der erfindungsgemäßen Zylinderkopfdichtung;
- Fig. 2: einen Schnitt durch diesen Dichtungsteil gemäß der Linie 2-2 in Fig. 1, und
- Fig. 3: einen der Fig. 2 entsprechenden Schnitt durch die zweite Ausführungsform.

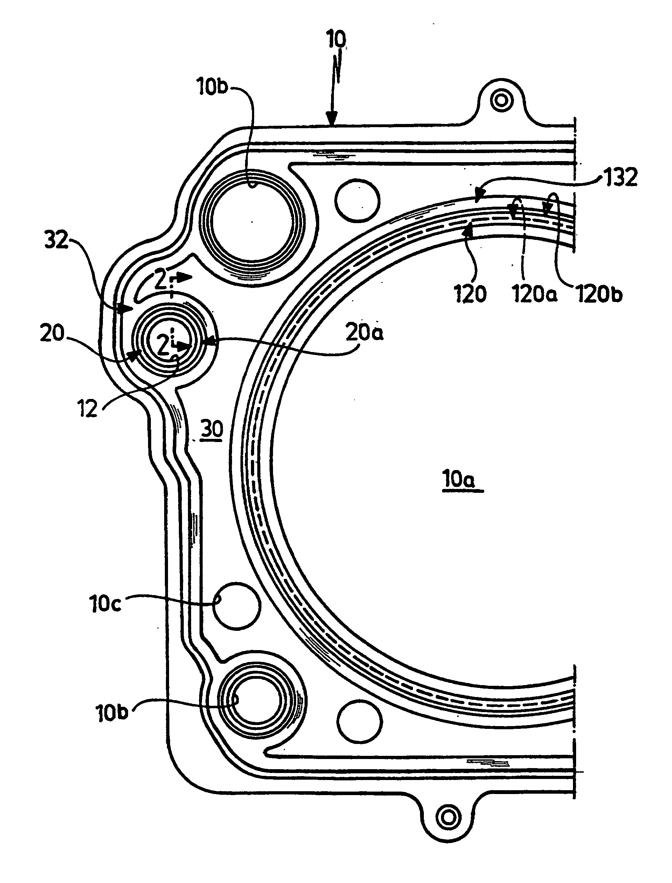

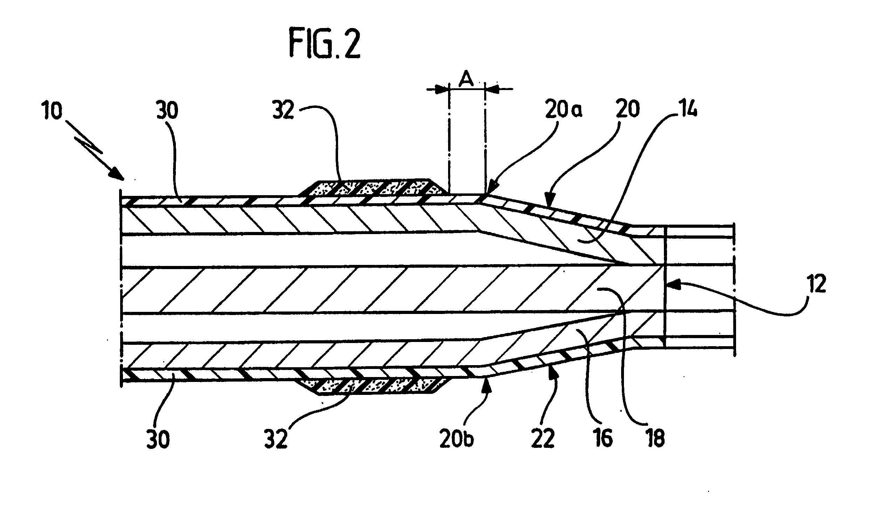

Die in Fig. 1 gezeigte Zylinderkopfdichtung hat eine Dichtungsplatte 10, in der unter anderem mehrere Brennraum-Durchgangsöffnungen 10a, von denen nur ein Teil einer einzigen Öffnung dargestellt ist, Durchgangsöffnungen 10b für Zylinderkopfschrauben und Paßhülsen sowie Flüssigkeits-Durchgangsöffnungen 10c und 12 für Motoröl und Kühlmittel vorgesehen sind; bei der in den Figuren 1 und 2 gezeigten Durchgangsöffnung 12 soll es sich um eine Durchgangsöffnung für Drucköl handeln.

Wie die Fig. 2 erkennen läßt, besteh die Dichtungsplatte 10 im wesentlichen aus drei aufeinandergeschichteten Stahlblechlagen, nämlich zwei äußeren Metallagen 14 und 16 aus Federstahlblech sowie einer mittleren Metallage 18, welche keine elastischen Eigenschaften aufweisen muß. Um die Durchgangsöffnung 12 herum weist jede der äußeren Metallagen 14 und 16 eine Halbsicke 20 bzw. 22 auf, welche die Durchgangsöffnung 12 ringförmig umschließt, d. h. in sich geschlossen ist. Der Kamm einer jeden dieser Halbsicken wurde mit 20a bzw. 20b bezeichnet.

Die die beiden Hauptoberflächen der Dichtungsplatte 10 bildenden Außenseiten der äußeren Metallagen 14 und 16 sind mit einer ersten Beschichtung 30 aus einer elastische Eigenschaften aufweisenden ersten Kunststoffmasse versehen, wobei sich diese erste Beschichtung über den Sickenkamm 20a bzw. 20b hinweg erstreckt; vorzugsweise sind die äußeren Metallagen 14 und 16 vollflächig beschichtet.

Erfindungsgemäß wird die Durchgangsöffnung 12 aber auch noch von zwei weiteren Dichtelementen ringförmig umschlossen, nämlich von jeweils einer Dichtwulst 32 auf jeder der beiden Hauptoberflächen der Dichtungsplatte 10. Jede Dichtwulst 32 verläuft in verhältnismäßig geringem Abstand "A" vom benachbarten Sickenkamm 20a bzw. 20b auf der von der Durchgangsöffnung 12 abgewandten Seite der Halbsicke 20 bzw. 22 und hat eine Querschnittsform, welche derjenigen eines flachen Trapezes entspricht. Jeder Dichtwulst 32 besteht aus einer zweiten Kunststoffmasse, deren Plastizität größer ist als diejenige der für die Beschichtungen 30 verwendeten ersten Kunststoffmasse, und vorzugsweise ist die Schichtdicke einer jeden Dichtwulst 32 größer als die Schichtdicke der Beschichtung 30, auf die die Dichtwulst im Siebdruckverfahren aufgebracht wurde. Wie die Fig. 2 erkennen läßt, beträgt die Breite der Dichtwulst 32 bzw. die Länge ihres Querschnitts ein Vielfaches des Abstandes "A" der Dichtwulst vom Sickenkamm 20a bzw. 20b, welcher bei eingebauter Zylinderkopfdichtung eine angenähert linienförmige Abdichtungszone definiert, in der die Zylinderkopfdichtung mit der betreffenden beschichteten Halbsicke gegen den Zylinderkopf bzw. Motorblock angepreßt wird.

Aus Fig. 1 wird ersichtlich, wie die Erfindung um eine Brennraum-Durchgangsöffnung 10a herum verwirklicht werden kann. Die Fig. 1 zeigt eine die Brennraum-Durchgangsöffnung 10a konzentrisch umschließende Vollsicke 120, deren Sickenkamm mit 120a bezeichnet wurde, sowie eine zur Brennraum-Durchgangsöffnung und der Vollsicke konzentrische erfindungsgemäße Dichtwulst 132, welche von der radial äußeren Begrenzung 120b (der äußere sogenannte Sickenfuß der Vollsicke 120) einen geringen Abstand aufweist.

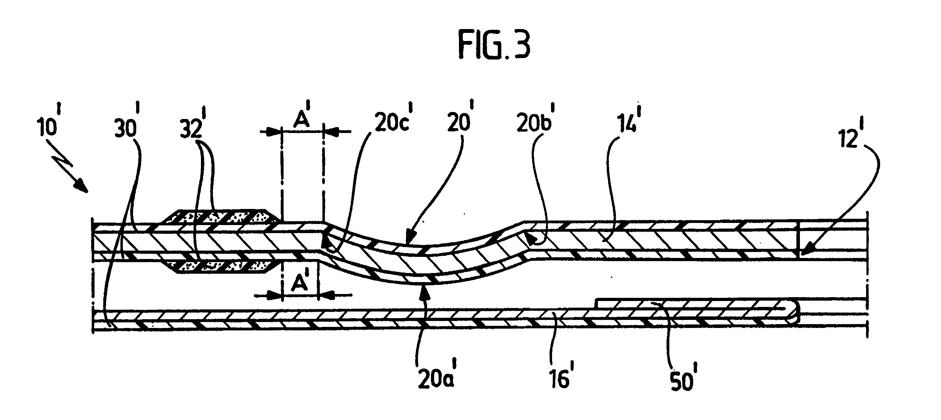

In der die zweite Ausführungsform in einem der Fig. 2 entsprechenden Schnitt darstellenden Fig. 3 wurden, soweit möglich, dieselben Bezugszeichen wie in den Figuren 1 und 2 verwendet, jedoch unter Hinzufügung eines Strichs.

Die in Fig. 3 dargestellte Dichtungsplatte 10' besitzt zwei Metallagen, nämlich eine erste Metallage 14' mit elastischen Eigenschaften und eine zweite Metallage 16', wobei in dem in Fig. 3 dargestellten Bereich der Dichtungsplatte 10' diese eine Durchgangsöffnung 12' aufweist, bei der es sich z. B. um eine Öldurchgangsöffnung handeln kann. Die erste Metallage 14' ist mit einer in sich geschlossenen und die Durchgangsöffnung 12' umschließenden Vollsicke 20' versehen, die in Richtung auf die zweite Metallage 16' vorspringt; ein die Durchgangsöffnung 12' umfassender Bereich der zweiten Metallage 16' ist auf diese Lage zurückgefaltet und bildet so in bekannter Weise einen sogenannten Stopper 50' für die Sicke 20', wodurch verhindert wird, daß beim Einbau der Zylinderkopfdichtung, d. h. beim Anziehen der Zylinderkopfschrauben, und im Motorbetrieb die Sicke völlig flachgedrückt werden kann.

Zur Mikroabdichtung gegenüber den Dichtflächen von Zylinderkopf und Motorblock sind die beiden Metallagen 14' und 16' auf den beiden Außenseiten der Dichtungsplatte 10' mit einer ersten Beschichtung 30' aus einer elastische Eigenschaften aufweisenden Kunststoffmasse beschichtet; zur Verbesserung des Abdichtvermögens der Sicke 20' an der Metallage 16' ist aber auch die im Innern der Dichtungsplatte liegende zweite Seite der Metallage 14' mit einer solchen Beschichtung 30' versehen.

Erfindungsgemäß wurden nun auf beide Seiten der Metallage 14', und zwar auf deren erste Beschichtungen 30', Dichtwülste 32' aufgetragen, welche die Sicke 20' umschließen und in sich geschlossene Dichtwulstringe bilden.

Bei eingebauter Zylinderkopfdichtung wird die Vollsicke 20' mit ihrem beschichteten Sickenkamm 20a' gegen die Metallage 16' und mit ihren beiden gleichfalls beschichteten Sickenfüßen 20b' und 20c' gegen die Dichtfläche des Zylinderkopfs bzw. Motorblocks angepreßt. Die auf der einen Außenseite der Dichtungsplatte 10' liegende Dichtwulst 32' befindet sich wieder in einem bezüglich der Durchgangsöffnung 12' radialen Abstand A' von der Abdichtungszone, welche bei eingebauter Zylinderkopfdichtung von dem Sickenfuß 20c' gebildet wird.

Anhand der im Inneren der Dichtungsplatte 10' liegenden Dichtwulst 32' wird jedoch ersichtlich, daß bei einer Vollsicke die Abstandsverhältnisse etwas anders sind wie bei einer Halbsicke, wie sie die Figuren 1 und 2 zeigen: Da im eingebauten Zustand der in Fig. 3 teilweise dargestellten Zylinderkopfdichtung (und im Motorbetrieb) die Sicke 20' gegenüber ihrer in Fig. 3 dargestellten Form abgeflacht wird, ergibt sich zwischen der beschichteten Sicke 20' und der Metallage 16' keine streng linienförmige, sondern vielmehr eine eher streifenförmige Abdichtungszone, welche sich unter Umständen bis in die Nähe der Sickenfüße 20b' und 20c' erstrecken kann. Unter anderem deshalb befindet sich die im Inneren der Dichtungsplatte 10' liegende Dichtwulst 32' gleichfalls in einem Abstand A' vom Sickenfuß 20c'.

Im folgenden werden Rezepturen für die Kunststoffmassen, aus denen sich die erste Beschichtung und die Dichtwulst herstellen lassen, sowie Materialien, die als Haftvermittler und für die Antihaftbeschichtung geeignet sind, angegeben, und zwar einschließlich der Bezugsquellen, wobei alle Ortsangaben ausgenommen Bollate, in Deutschland liegende Orte kennzeichnen. Die in den Rezepturen als Mengenangaben verwendete Abkürzung "phr" bedeutet dabei, wie in der Polymerchemie allgemein üblich, Gewichtsteile pro 100 Gewichtsteile Gummi bzw. Elastomer.

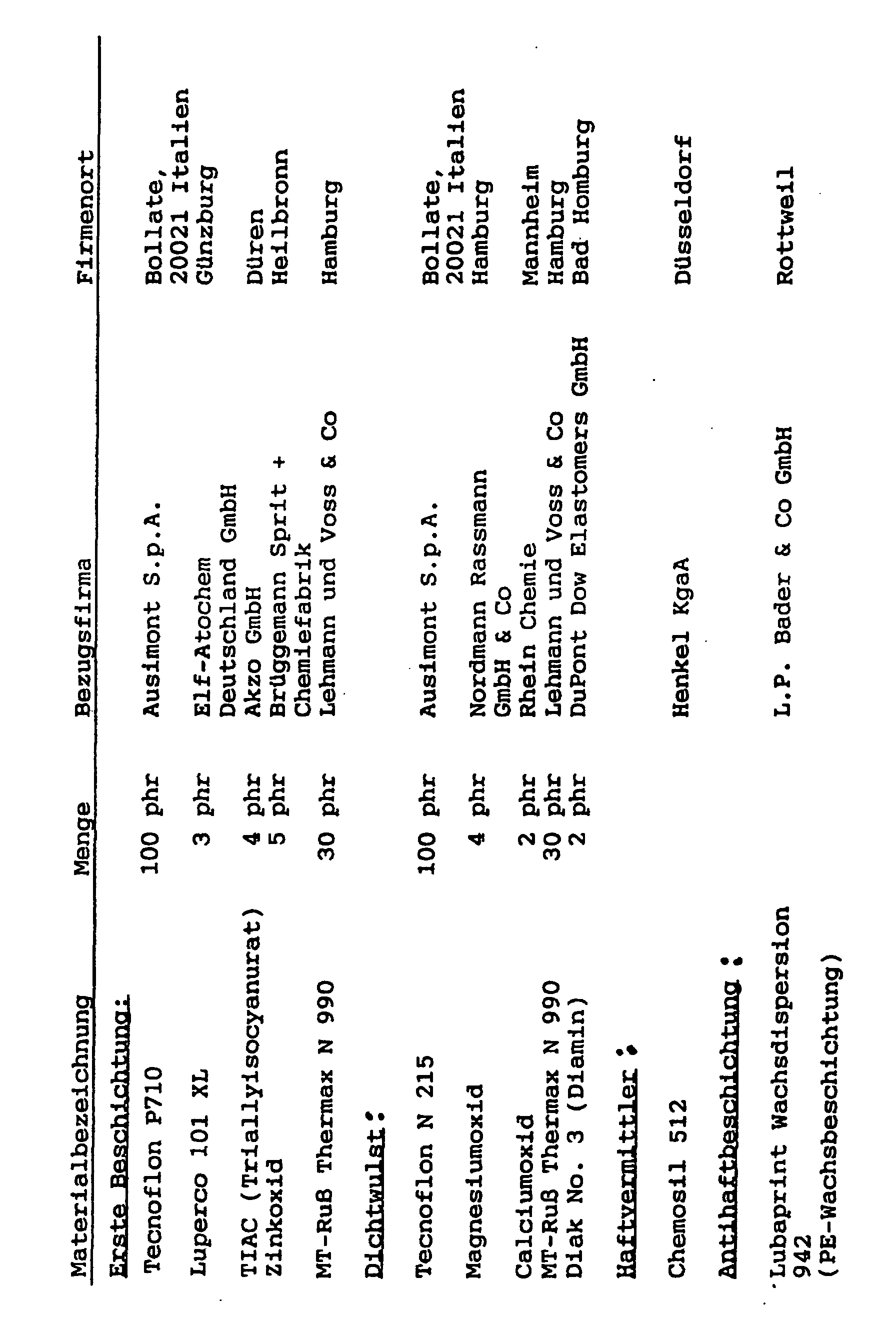

## Patentansprüche

1. Zylinderkopfdichtung mit einer Dichtungsplatte (10), welche mindestens eine Metallage (14, 16) mit elastischen Eigenschaften aufweist, deren eine Seite eine Außenseite der Dichtungsplatte bildet wobei die Dichtungsplatte eine Durchgangsöffnung (12) sowie eine letztere umschließende, in der Metallage ausgebildete Sicke (20, 22) aufweist, welche bei eingebauter Dichtung auf der Außenseite der Dichtungsplatte eine angenähert linienförmige, in sich geschlossene Abdichtungszone erhöhter Dichtflächenpressung bildet, und wobei die Metallage auf der Außenseite der Dichtungsplatte mindestens im Bereich der Abdichtungszone (20a, 20b) sowie zu beiden Seiten der letzteren eine erste Beschichtung (30) aus einer elastische Eigenschaften aufweisenden Kunststoffmasse besitzt, **dadurch gekennzeichnet, daß** die Metallage (14, 16) auf der Dichtungsplattenaußenseite mit einer die Durchgangsöffnung (12) umschließenden, in sich geschlossenen Dichtwulst (32) aus einer Kunststoffmasse beschichtet ist, welche auf der von der Durchgangsöffnung (12) abgewandten Seite der Abdichtungszone (20a, 20b) sowie im bezüglich der Durchgangsöffnung radialen Abstand (A) von letzterer angeordnet ist, wobei der Kamm der Dichtwulst (32) von der sie tragenden Metallage (14, 16) einen größeren Abstand aufweist als die Oberseite der ersten Beschichtung (30).

2. Zylinderkopfdichtung mit einer Dichtungsplatte (10'), welche mindestens zwei Metallagen (14', 16') aufweist, von denen mindestens eine erste elastische Eigenschaften besitzt, wobei die Dichtungsplatte eine Durchgangsöffnung (12') sowie eine letztere umschließende, in der ersten Metallage (14') ausgebildete Sicke (20') aufweist, welche bei eingebauter Dichtung gegen die andere Metallage (16') anliegt und so eine angenähert linienförmige, in sich geschlossene Abdichtungszone erhöhter Dichtflächenpressung bildet, und wobei die erste Metallage (14') auf ihrer der anderen Metallage zugewandten Seite mindestens im Bereich der Abdichtungszone sowie zu beiden Seiten der letzteren eine erste Beschichtung (30') aus einer elastische Eigenschaften aufweisenden Kunststoffmasse besitzt, **dadurch gekennzeichnet, daß** die erste Metallage (14') auf ihrer der anderen Metallage (16') zugewandten Seite mit einer die Durchgangsöffnung (12') umschließenden, in sich geschlossenen Dichtwulst (32') aus einer Kunststoffmasse beschichtet ist, welche auf der von der Durchgangsöffnung (12') abgewandten Seite der Abdichtungszone sowie im bezüglich der Durchgangsöffnung (12') radialen Abstand (A') von letzterer angeordnet ist, wobei der Kamm der Dichtwulst (32') von der ersten Metallage (14') einen größeren Abstand aufweist als die Oberseite der ersten Beschichtung (30').

3. Zylinderkopfdichtung nach Anspruch 1 oder 2, **dadurch gekennzeichnet, daß** die Dichtwulst (32; 32') auf der ersten Beschichtung (30; 30') angeordnet ist.

4. Zylinderkopfdichtung nach einem der Ansprüche 1 bis 3, **dadurch gekennzeichnet, daß** die die Dichtwulst (32; 32') bildende Kunststoffmasse eine höhere Plastizität aufweist als die Kunststoffmasse der ersten Beschichtung (30; 30').

5. Zylinderkopfdichtung nach Anspruch 4, **dadurch gekennzeichnet, daß** die beiden Kunststoffmassen Fluorelastomere sind, wobei die erste Beschichtung (30; 30') von einem Fluorelastomer gebildet wird, dessen Vernetzungsgrad höher ist als derjenige des die Dichtwulst (32; 32') bildenden Fluorelastomers.

6. Zylinderkopfdichtung nach einem der vorstehenden Ansprüche, **dadurch gekennzeichnet, daß** der Abstand des Kamms der Dichtwulst (32; 32') von der diese tragenden Metallage (14, 16; 14') 5 bis 210 µm größer ist als der Abstand der Oberseite der ersten Beschichtung (30; 30') von dieser Metallage.

7. Zylinderkopfdichtung nach Anspruch 6, **dadurch gekennzeichnet, daß** bei Ausbildung der Sicke als Halbsicke (20, 22) die Abstandsdifferenz 5 bis 80 µm, insbesondere 20 bis 30 µm beträgt.

8. Zylinderkopfdichtung nach Anspruch 6, **dadurch gekennzeichnet, daß** bei Ausbildung der Sicke als Vollsicke (20') die Abstandsdifferenz 5 bis 150 µm, insbesondere 50 bis 100 µm beträgt.

9. Zylinderkopfdichtung nach einem der vorstehenden Ansprüche, **dadurch gekennzeichnet, daß** der Abstand (A; A') der Dichtwulst (32; 32') von der Abdichtungszone mindestens 0,5 mm beträgt.

10. Zylinderkopfdichtung nach einem der vorstehenden Ansprüche, **dadurch gekennzeichnet, daß** der Abstand (A; A') der Dichtwulst (32; 32') von der Abdichtungszone höchstens 3 mm beträgt.

11. Zylinderkopfdichtung nach einem der vorstehenden Ansprüche, **dadurch gekennzeichnet, daß** der Querschnitt der Dichtwulst (32; 32') ungefähr die Form eines flachen Rechtecks oder Trapezes aufweist.

12. Zylinderkopfdichtung nach einem der vorstehenden Ansprüche, **dadurch gekennzeichnet, daß** die Länge des Querschnitts der Dichtwulst (32; 32') ein Vielfaches des Abstands (A; A') der Dichtwulst von der Abdichtungszone beträgt.

13. Zylinderkopfdichtung nach einem der vorstehenden Ansprüche, **dadurch gekennzeichnet, daß** die erste Beschichtung (30; 30') und die Dichtwulst (32; 32') von einer Antihaftbeschichtung überdeckt sind.

## Claims

1. Cylinder head gasket with a gasket plate (10) comprising at least one metal layer (14, 16) with elastic properties, one side thereof forming an outer side of the gasket plate, the gasket plate having a through opening (12) and a bead-like embossment (20, 22) formed in the metal layer and surrounding the through opening, the bead-like embossment forming an approximately linear, self-contained sealing zone with increased sealing surface pressure on the outer side of the gasket plate when the gasket is fitted, and the metal layer having a first coating (30) consisting of a plastic material with elastic properties on the outer side of the gasket plate at least in the area of the sealing zone (20a, 20b) as well as to both sides of the sealing zone, **characterized in that** the metal layer (14, 16) is coated on the outer side of the gasket plate with a sealing bead (32) closed upon itself, surrounding the through opening (12) and consisting of a plastic material, the sealing bead being arranged on the side of the sealing zone (20a, 20b) facing away from the through opening (12) as well as at a radial distance (A) from the sealing zone in relation to the through opening, and the ridge of the sealing bead (32) being at a greater distance from the metal layer (14, 16) supporting it than the upper side of the first coating (30).

2. Cylinder head gasket with a gasket plate (10') comprising at least two metal layers (14', 16'), at least a first one thereof having elastic properties, the gasket plate having a through opening (12') and a bead-like embossment (20') formed in the first metal layer (14') and surrounding the through opening, the bead-like embossment abutting against the other metal layer (16') when the gasket is fitted and thus forming an approximately linear, self-contained sealing zone with increased sealing surface pressure, and the first metal layer (14') having a first coating (30') consisting of a plastic material with elastic properties on its side facing the other metal layer at least in the area of the sealing zone as well as to both sides of the sealing zone, **characterized in that** the first metal layer (14') is coated on its side facing the other metal layer (16') with a sealing bead (32') closed upon itself, surrounding the through opening (12') and consisting of a plastic material, the sealing bead being arranged on the side of the sealing zone facing away from the through opening (12') as well as at a radial distance (A') from the sealing zone in relation to the through opening (12'), and the ridge of the sealing bead (32') being at a greater distance from the first metal layer (14') than the upper side of the first coating (30').

3. Cylinder head gasket as defined in claim 1 or 2, **characterized in that** the sealing bead (32; 32') is arranged on the first coating (30; 30').

4. Cylinder head gasket as defined in any one of claims 1 to 3, **characterized in that** the plastic material forming the sealing bead (32; 32') has a greater plasticity than the plastic material of the first coating (30; 30').

5. Cylinder head gasket as defined in claim 4, **characterized in that** the two plastic materials are fluorocarbon polymers, and the first coating (30; 30') is formed from a fluorocarbon polymer having a degree of cross-linking greater than that of the fluorocarbon polymer forming the sealing bead (32; 32').

6. Cylinder head gasket as defined in any one of the preceding claims, **characterized in that** the distance of the ridge of the sealing bead (32; 32') from the metal layer (14, 16; 14') supporting it is 5 to 210 µm greater than the distance of the upper side of the first coating (30; 30') from this metal layer.

7. Cylinder head gasket as defined in claim 6, **characterized in that** when the bead-like embossment is designed as a half bead embossment (20, 22) the difference in distance is 5 to 80 µm, in particular, 20 to 30 µm.

8. Cylinder head gasket as defined in claim 6, **characterized in that** when the bead-like embossment is designed as a full bead embossment (20') the difference in distance is 5 to 150 µm, in particular, 50 to 100 µm.

9. Cylinder head gasket as defined in any one of the preceding claims, **characterized in that** the distance (A, A') of the sealing bead (32; 32') from the sealing zone is at least 0.5 mm.

10. Cylinder head gasket as defined in any one of the preceding claims, **characterized in that** the distance (A, A') of the sealing bead (32; 32') from the sealing zone is at the most 3 mm.

11. Cylinder head gasket as defined in any one of the preceding claims, **characterized in that** the cross section of the sealing bead (32; 32') has approximately the shape of a flat rectangle or trapezoid.

12. Cylinder head gasket as defined in any one of the preceding claims, **characterized in that** the length of the cross section of the sealing bead (32; 32') is a multiple of the distance (A; A') of the sealing bead from the sealing zone.

13. Cylinder head gasket as defined in any one of the preceding claims, **characterized in that** the first coating (30; 30') and the sealing bead (32; 32') are covered with a non-stick coating.

## Revendications

1. Joint de culasse comportant une plaque d'étanchéité (10) qui présente au moins une couche métallique (14, 16) à propriétés élastiques, dont un côté forme une face extérieure de la plaque d'étanchéité, la plaque d'étanchéité présentant une ouverture traversante (12) ainsi qu'une moulure (20, 22) entourant cette dernière et réalisée dans la couche métallique, et lorsque le joint est mis en place, la moulure formant, sur la face extérieure de la plaque d'étanchéité, une zone d'étanchéité approximativement de forme linéaire et fermée sur elle-même, à pression de surface d'étanchéité accrue, et la couche métallique possédant sur la face extérieure de la plaque d'étanchéité, au moins dans la région de la zone d'étanchéité (20a, 20b) ainsi que des deux côtés de cette dernière, un premier revêtement (30) en une masse de matière plastique présentant des propriétés élastiques, **caractérisé en ce que** sur la face extérieure de la plaque d'étanchéité, la couche métallique (14, 16) est revêtue d'un bourrelet d'étanchéité (32) en une masse de matière plastique, fermé sur lui-même et entourant l'ouverture traversante (12), et, sur le côté de la zone d'étanchéité (20a, 20b) qui est détourné de l'ouverture traversante (12), le bourrelet est agencé à une distance radiale (A) de la zone d'étanchéité par rapport à l'ouverture traversante, la crête du bourrelet d'étanchéité (32) présentant par rapport à la couche métallique (14, 16) qui le porte, une distance plus grande que la face supérieure du premier revêtement (30).

2. Joint de culasse comportant une plaque d'étanchéité (10') qui présente au moins deux couches métalliques (14', 16') dont au moins une première possède des propriétés élastiques, la plaque d'étanchéité présentant une ouverture traversante (12') ainsi qu'une moulure (20') entourant cette dernière et réalisée dans la première couche métallique (14'), et lorsque le joint est monté, la moulure est en appui contre l'autre couche métallique (16') et forme ainsi une zone d'étanchéité approximativement de forme linéaire et fermée sur elle-même, avec une pression de surface d'étanchéité accrue, et sur son côté tourné vers l'autre couche métallique (16'), la première couche métallique (14') possède, au moins dans la région de la zone d'étanchéité ainsi que des deux côtés de cette dernière, un premier revêtement (30') en une masse de matière plastique présentant des propriétés élastiques, **caractérisé en ce que** sur sa face tournée vers l'autre couche métallique (16'), la première couche métallique (14') est revêtue d'un bourrelet d'étanchéité (32') en une masse de matière plastique, fermé sur lui-même et entourant l'ouverture traversante (12'), et, sur le côté de la zone d'étanchéité qui est détourné de l'ouverture traversante (12'), le bourrelet d'étanchéité est agencé à une distance radiale (A') de la zone d'étanchéité par rapport à l'ouverture traversante (12'), la crête du bourrelet d'étanchéité (32') présentant par rapport à la première couche métallique (14') une distance plus grande que la face supérieure du premier revêtement (30').

3. Joint de culasse selon l'une ou l'autre des revendications 1 et 2, **caractérisé en ce que** le bourrelet d'étanchéité (32 ; 32') est agencé sur le premier revêtement (30 ; 30').

4. Joint de culasse selon l'une des revendications 1 à 3, **caractérisé en ce que** la masse de matière plastique formant le bourrelet d'étanchéité (32 ; 32') présente une plus grande plasticité que la masse de matière plastique du premier revêtement (30 ; 30').

5. Joint de culasse selon la revendication 4, **caractérisé en ce que** les deux masses de matière plastique sont des élastomères fluorés, le premier revêtement (30 ; 30') étant formé par un élastomère fluoré dont le degré de réticulation est plus élevé que celui de l'élastomère fluoré formant le bourrelet d'étanchéité (32 ; 32').

6. Joint de culasse selon l'une des revendications précédentes, **caractérisé en ce que** la distance entre la crête du bourrelet d'étanchéité (32 ; 32') et la couche métallique (14, 16 ; 14', 16') qui le porte est de 5 à 210 µm supérieure à la distance entre la face supérieure du premier revêtement (30 ; 30') et cette couche métallique.

7. Joint de culasse selon la revendication 6, **caractérisé en ce que** dans le cas où la moulure est réalisée sous forme de demi-moulure (20, 22), la différence de distance est de 5 à 80 µm, en particulier de 20 à 30 µm.

8. Joint de culasse selon la revendication 6, **caractérisé en ce que** lorsque la moulure est réalisée sous forme de moulure pleine (20'), la différence de distance est de 5 à 150 µm, en particulier de 50 à 100 µm.

9. Joint de culasse selon l'une des revendications précédentes, la distance (A : A') entre le bourrelet d'étanchéité (32 ; 32') et la zone d'étanchéité est d'au moins 0,5 mm.

10. Joint de culasse selon l'une des revendications précédentes, **caractérisé en ce que** la distance (A : A') entre le bourrelet d'étanchéité (32 ; 32') et la zone d'étanchéité est d'au plus 3 mm.

11. Joint de culasse selon l'une des revendications précédentes, **caractérisé en ce que** la section transversale du bourrelet d'étanchéité (32 ; 32') présente approximativement la forme d'un rectangle plat ou d'un trapèze.

12. Joint de culasse selon l'une des revendications précédentes, **caractérisé en ce que** la longueur de la section transversale du bourrelet d'étanchéité (32 ; 32') est un multiple de la distance (A ; A') entre le bourrelet d'étanchéité et la zone d'étanchéité.

13. Joint de culasse selon l'une des revendications précédentes, **caractérisé en ce que** le premier revêtement (30 ; 30') et le bourrelet d'étanchéité (32 ; 32') sont recouverts d'un revêtement antiadhésif.
